(19) Europäisches Patentamt

European Patent Office

Office européen des brevets

(11) **EP 0 892 217 B1**

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(51) Int Cl.$^7$: **F23R 3/00**, F02C 7/045

(21) Anmeldenummer: **97810490.9**

(22) Anmeldetag: **15.07.1997**

(54) **Vorrichtung zur Dämpfung von Brennkammerschwingungen**

Vibration-damping device for a combustion chamber

Dispositif d'atténuation des vibrations d'une chambre de combustion

(84) Benannte Vertragsstaaten:
**BE DE FR GB IT**

(43) Veröffentlichungstag der Anmeldung:
**20.01.1999 Patentblatt 1999/03**

(73) Patentinhaber: **ALSTOM (Switzerland) Ltd 5401 Baden (CH)**

(72) Erfinder:
• **Döbbeling, Klaus, Dr.
5210 Windisch (CH)**
• **Paschereit, Christian, Dr.
5400 Baden (CH)**
• **Polifke, Wolfgang, Dr.
5210 Windisch (CH)**

(56) Entgegenhaltungen:
EP-A- 0 597 138    US-A- 3 734 234
US-A- 3 848 697    US-A- 4 137 992
US-A- 4 199 936    US-A- 4 298 090
US-A- 5 044 930

**Beschreibung**

**Technisches Gebiet**

Die Erfindung betrifft eine Ringbrennkammer für eine Gasturbine mit verminderten thermoakustischen Schwingungen, bei der stromaufwärts einer luftgekühlten Brennkammer eine Brennkammerhaube angeordnet ist, wobei zumindest ein Anteil eines vom Verdichter kommenden Luftstroms über Kühlkanäle geführt wird, welche zumindest in Teilbereichen entlang der Brennkammer verlaufen, wobei die Kühlkanäle einen Eintritt in die Brennkammerhaube aufweisen.

**Stand der Technik**

In herkömmlichen Brennkammern wird ein erster Anteil eines vom Verdichter kommenden Luftstrom als Brennluft den in der Haube sitzenden Brennern zugeführt. Ein zweiter (im allgemeinen der grössere) Anteil des vom Verdichter kommenden Luftstroms wird durch Kühlkanäle geführt, welche zumindest in Teilbereichen entlang der inneren und/oder äußeren Brennkammer verlaufen, und kühlt konvektiv die Brennkammerwände, um dann ebenfalls in der Brennkammerhaube gesammelt und dem Brennvorgang zugeführt zu werden. Unter Umständen wird ein kleiner Anteil der durch die Kühlkanäle geführten Kühlluft in die Brennkammer eingespeißt, um die Brennkammerwände zu kühlen.

In Brennkammern, wie sie insbesondere in Gasturbinen Anwendung finden, treten häufig unerwünschte thermoakustische Schwingungen auf. Dabei handelt es sich um sich gegenseitig aufschaukelnde Wechselwirkungen thermischer und akustischer Störungen. Es können dabei unerwünscht hohe Schwingungsamplituden auftreten, die zu einer hohen mechanischen Belastung der Brennkammer, einem Anstieg der Emissionen durch inhomogene Verbrennung und im Extremfall zu einem Erlöschen der Flamme führen können. In konventionellen Brennkammern spielt die Kühlung durch Einblasung von Kühlluft in die Brennkammer entlang der Bremmkammerwände in der Regel eine wichtige Rolle bei der Schalldämpfung und damit der Dämpfung solcher Schwingungen der Brennkammer. Um niedrige $NO_x$-Emissionen zu erzielen, wird in modernen Gasturbinen ein zunehmender Anteil der Luft durch die Brenner selbst geleitet, die Kühllufteinblasung also reduziert. Um die thermische Belastung der Brennkammerwände auf ein erträgliches Mass zu reduzieren, werden diese konvektiv gekühlt. Die dazu benötigte Luft wird in der Brennkammerhaube gesammelt und somit den Brennern zugeführt. Durch die damit einhergehende geringere Schalldämpfung treten die eingangs angesprochenen, mit den unerwünschten Schwingungen verbundenen Probleme in solchen modernen Brennkammern demnach verstärkt auf.

Die Erfahrung zeigt nun, daß thermoakustische Schwingungen oder Instabilitäten insbesondere nahe den Eigenschwingungen des schwingenden Systems auftreten. Das schwingende System besteht dabei aus der Brennkammer und je nach den akustischen Randbedingungen auch angrenzenden Volumina, etwa der Brennkammerhaube. Die Frequenzen der Druck- und Geschwindigkeitsschwankungen liegen dann nahe der Eigenfrequenzen des Systems und auch die Schwingungsmoden, also die räumliche Struktur der Schwingungsamplituden entsprechen in etwa einer der Eigenmoden des Systems

In modernen Gasturbinen werden oft Ringbrennkammern geringer radialer Ausdehnung verwendet. Bei der Diskussion von Schwingungen und Schwingungsmoden in solchen Ringbrennkammern empfiehlt sich die Benutzung von Zylinderkoordinaten $\rho, \varphi, z$. Diese hängen mit den rechtwinkligen kartesischen Koordinaten $x, y, z$ in üblicher Weise über $x = \rho \cos \varphi$, $y = \rho \sin \varphi$, $z = z$, zusammen. Die radiale Koordinate $\rho$ ist bei einer Ringbrennkammer geringer radialer Ausdehnung im wesentlichen konstant und gleich dem Radius der Brennkammer R. Die Koordinate $z$ läuft entlang der Achse der Brennkammer. Der Winkel $\varphi$ läuft um die Achse der Brennkammer herum. Er wird im folgenden als Azimut bezeichnet. Schwingungsmoden, bei denen die Druckschwankungen keine Variation entlang der $z$-Richtung aufweisen, sondern nur eine Variation mit dem Azimutwinkel $\varphi$, heißen rein azimutale Schwingungsmoden.

In besagten Ringbrennkammern geringer radialer Ausdehnung sind erfahrungsgemäß die rein azimutalen Moden, insbesondere die azimutale Grundmode besonders wichtig. Da typischerweise in solchen Brennkammern der Brennkammerradius etwa so groß ist wie die Länge der Brennkammer und somit der Umfang der Brennkammer wesentlich grösser als die Länge, weisen diese azimutalen Moden auch die niedrigsten Schwingungsfrequenzen auf. Die Schwingungsfrequenz der rein azimutalen Moden ist dabei ein ganzzahliges Vielfaches der azimutalen Grundmode. Erfahrungsgemäß ist die Dämpfung der niedrigsten thermoakustischen Schwingungen besonders wichtig.

Rein azimutale Schwingungen sind nur möglich, wenn beide Enden des schwingenden Systems eine hohe akustische Impedanz aufweisen. An einem Ende, dem Brennkammeraustritt zur Turbine, ist diese Bedingung sicher erfüllt. Da der Druckabfall an den Brennern relativ gering ist, muß an dem anderen Ende die Brennkammerhaube mit in die Betrachtung einbezogen werden.

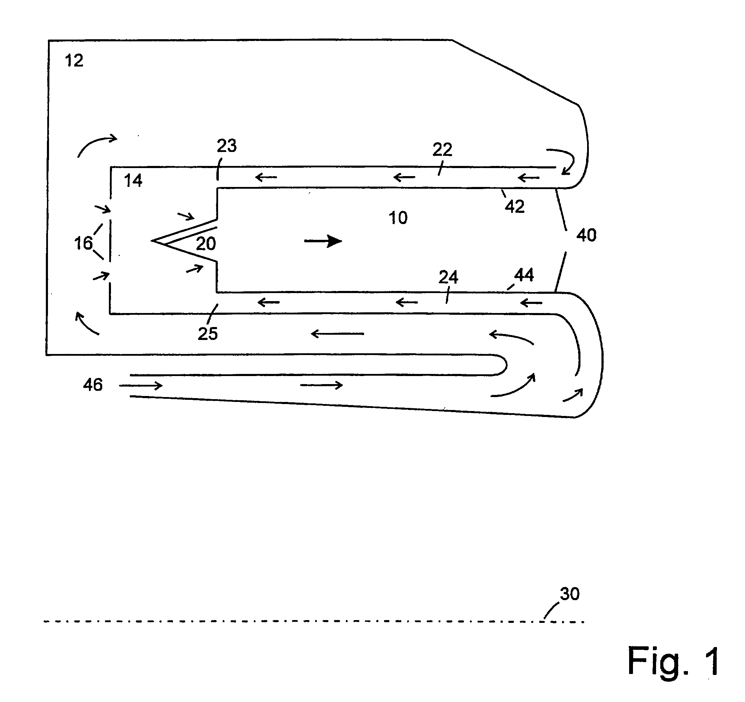

Dort bildet dann die Brennkammerhaube das akustisch harte Ende (hohe Impedanz) des schwingenden Systems. Die akustische Impedanz der Brennkammerhaube könnte zwar durch eine Vergrösserung der Bypass-Öffnungen *((16) in Fig.1)* verringert werden. Dies ist jedoch in vielen Fällen kein praktisch gangbarer Weg, da eine derartige Massnahme eine Verringerung des Kühlluftmassenstroms zur Folge hätte.

Es ist auch möglich, Helmholtzresonatoren, wie etwa in EP-A1 0597138 beschrieben, im Bereich der Haube zum Einsatz zu bringen. Dies ist jedoch aus Platzgründen nicht immer möglich. Auch wirken Helmholtzresonatoren nur in einem schmalen Frequenzband um eine Grundfrequenz herum. Sollen mehrere Moden mit verschiedenen Frequenzen gedämpft werden, so wäre eine Reihe von Helmholtzresonatoren nötig, was einen hohen Platzbedarf und grossen konstruktiven Aufwand erforderte.

Darstellung der Erfindung

Der Erfindung liegt daher der Erfindung die Aufgabe zugrunde, eine Vorrichtung zum Dämpfen azimutaler thermoakustischer Schwingungen in Ringbrennkammern *durch eine Verminderung der akustischen Impedanz der Brennkammerhaube* zu schaffen, bei der der Kühlluftmassenstrom nicht reduziert wird, die neben der Grundfrequenz auch deren Harmonische bedämpft, und die einen möglichst geringen konstruktiven Aufwand und Platzbedarf erfordert.

Diese Aufgabe wird erfindungsgemäss durch eine resonante Abstimmung *der akustischen Eigenschaften* der Kühlkanäle gelöst, *indem die Kühlkanäle als Resonatoren ausgebildet sind, die bei der azimutalen Grundfrequenz der Brennkammer resonant sind.* Da die Kühlluftkanäle an beiden Enden akustisch offen sind, tritt Resonanz auf, wenn die Länge der Kühlluftkanäle gerade der halben Wellenlänge *der axialen Schwingung dieser Frequenz in den Kühlkanälen entspricht.*

Es ist darüber hinaus vorteilhaft, die Kühlluftzuführung durch meridiane Schotts in voneinander getrennte Kanäle aufzuteilen, so dass in der Kühlluftzuführung keine azimutalen Schwingungen auftreten können.

Um die notwendige Länge der Kühlluftkanäle bei typischen Ringbrennkammern zu erreichen, werden die in den Sammelraum mündenden Enden der Kühlkanäle verlängert, so dass die Kühlluftkanäle erfindungsgemäss an der Brennkammer entlanglaufen und sich an deren Ende in den Sammelraum zurückbiegen.

Besonders vorteilhaft ist es, wenn die Kühlluftkanäle spiralig um die Brennkammer geführt sind. Durch geeignete Wahl des Winkels zwischen der Brennkammerachse und der Orientierung der Kanäle kann dabei die notwendige Länge der Kühlluftkanäle erreicht werden, wobei gleichzeitig die Kühlluftkanäle stets an der Brennkammerwand geführt werden.

Weiterhin ist es von Vorteil, wenn am Ort des Eintritts der Kühlkanäle in den Sammelraum die Querschnittsfläche des Sammelraums an dieser Stelle ($A_{Sammelraum}$) deutlich grösser ist als die Öffnung des Kühlkanals an dieser Stelle ($A_{Kühlkanal}$). Dadurch entstehen an den Öffnungen der Kühlkanäle in den Sammelraum klar definierte Randbedingungen, welche zu einer möglichst vollständigen Reflexion der Schwingungen im Kühlkanal führen.

Es ist von Vorteil, dass solcherart ausgelegte Kühlkanäle nicht nur auf die Grundfrequenz, sondern auch auf Oberschwingungen der unerwünschten thermoakustischen Schwingungen abgestimmt sind. Dabei kann es von Vorteil sein, Kühlkanäle unterschiedlicher Länge zu fertigen, so daß sie aufgrund ihrer unterschiedlichen Länge verschiedene Frequenzen dämpfen.

**Kurze Beschreibung der Zeichnungen**

Die Erfindung soll nachfolgend anhand von Ausführungsbeispielen im Zusammenhang mit den Zeichnungen näher erläutert werden. Es zeigen

Fig. 1 in schematisierter Darstellung einen Teillängsschnitt einer Ringbrennkammer nach dem Stand der Technik;

Fig. 2 in schematisierter Darstellung einen Teillängsschnitt einer Ringbrennkammer mit einem $\lambda/2$ Kühlkanal gemäß einem ersten Ausführungsbeispiel der Erfindung;

Fig. 3a einen achsnormalen Schnitt durch die innere und äußere Brennkammerwand einer Brennkammer;

Fig. 3b eine Abwicklung der spiralig um die Brennkammer gewickelten Kühlkanäle.

Es sind nur die für das Verständnis der Erfindung wesentlichen Elemente gezeigt. Nicht gezeigt sind beispielsweise das Abgasgehäuse der Gasturbine mit Abgasrohr und Kamin, der Verdichterteil, die Turbine und die Details des Brenners wie etwa die Brennstoffdüse. Die Strömungsrichtung der Arbeitsmittel ist mit Pfeilen bezeichnet.

**Wege zur Ausführung der Erfindung**

Figur 1 zeigt eine herkömmliche Ringbrennkammer, die rotationssymmetrisch um die Maschinenachse 30 aufgebaut ist. Verdichtete Luft 46 strömt, wie durch die Pfeile angegeben, vom Verdichter her in den Sammelraum 12. Der Hauptanteil der Luft gelangt durch die Kühlkanäle 22 und 24 in die Brennkammerhaube 14 und von dort durch den Brenner 20 in die Brennkammer 10. Der Rest der Luft gelangt direkt durch die Bypass-Öffnungen 16 in die Brennkammerhaube 14. Der Brenner 20 ist in Fig. 1 nur schematisch dargestellt. Er enthält unter anderem noch eine Brennstoffdüse (nicht gezeigt) durch die Brennstoff in die Brennkammer eingedüst wird. Ein kleiner Teil der Luft fließt als Film- oder Effusionskühlluft von den Kühlkanälen 22 und 24 durch mehrere Öffnungen in den Wandteilen 42 und 44 in die Brennkammer 10. Das Bezugzeichen 40 markiert den Austritt zur (nicht gezeigten) Turbine.

Thermoakustische Schwingungen treten in einer solchen Ringbrennkammer erfahrungsgemäß insbesondere nahe den Eigenschwingungen des schwingenden Systems auf. In Ringbrennkammern geringer Höhe und axialer Ausdehnung, wie in Fig. 1, sind erfahrungsgemäß die rein azimutalen Moden, insbesondere die azimutale Grundmode besonders wichtig. Das schwingende System besteht dabei aus dem aus der Brennkammer 10 und der Brennkammerhaube 14 gebildetem Volumen, da der Druckverlust an den Brennern 20 zu klein ist, als daß dort ein akustisch harter Abschluß gebildet würde.

Die Eigenmoden dieses Systems lassen sich wie die Eigenmoden eines Ringspaltes durch einen axialen Index m und einen azimutalen Index n, also ein Paar (m,n), klassifizieren. Die Druckschwankungen der Eigenschwingungen des Systems sind dann von der Form

$$\Delta p(z,\varphi) \sim \cos(\pi m z/L)\sin(n\varphi) \qquad (1)$$

mit zugehörigen Eigenfrequenzen

$$(\omega_{m,n}/c)^2 = (\pi m/L)^2 + (n/R)^2 \qquad (2)$$

Dabei stellt L die Länge des schwingenden Systems, also die Länge der Brennkammer 10 und der Brennkammerhaube 14 dar. R stellt den Radius des Ringspaltes dar, also etwa in Fig.1 die Länge der Senkrechten auf der Symmetrieachse 30 von dieser Symmetrieachse zum Brenner 20, z stellt die Koordinate parallel zur Symmetrieachse 30, und φ den azimutalen Winkel um diese Achse herum dar.

Die Erfahrung zeigt nun, daß in Ringbrennkammern von Gasturbinen vor allem die rein azimutalen Moden (0,n) und insbesondere die azimutale Grundmode (0,1) bei thermoakustischen Instabilitäten auftreten. Typischerweise treten zusammen mit der Grundschwingung (0,1) zumindest einige der höheren Moden (0,n) auf. Aus Gleichung (2) ergibt sich, daß die Frequenzen dieser höheren Moden ganzzahlige Vielfache der Frequenz der Grundschwingung sind, $\omega_{0,n} = n\,\omega_{0,1}$. Der Wert von n, bis zu dem höhere Moden bei den Schwingungen der Brennkammer in nennenswerter Amplitude auftreten, wird im Folgenden mit $n_{max}$ bezeichnet. Im Weiteren wird die Frequenz der azimutalen Grundmode $\omega_{0,1}$ kurz mit $\omega_0$ bezeichnet.

Erfindungsgemäß werden nun die akustischen Eigenschaften der Kühlkanäle 22 und 24 so abgestimmt, daß die akustische Impedanz an den Eintrittsorten 23 und 25 der Kühlluft in die Brennkammerhaube 14 bei den zu dämpfenden Frequenzen minimal wird. Dies ist der Fall, wenn die Kühlkanäle 22 und 24 bei diesen Frequenzen resonant werden.

Es ist im Hinblick auf die Schalldämpfung vorteilhaft, die Kühlluftzuführung durch meridiane Schotts 47 in voneinander getrennte Segmente aufzuteilen, so daß in der Kühlluftzuführung keine azimutalen Schwingungen auftreten können. Die Anzahl dieser Segmente sollte so gewählt werden, daß in jedem Kühlkanalsegment nur rein axiale Schwingungen auftreten können.

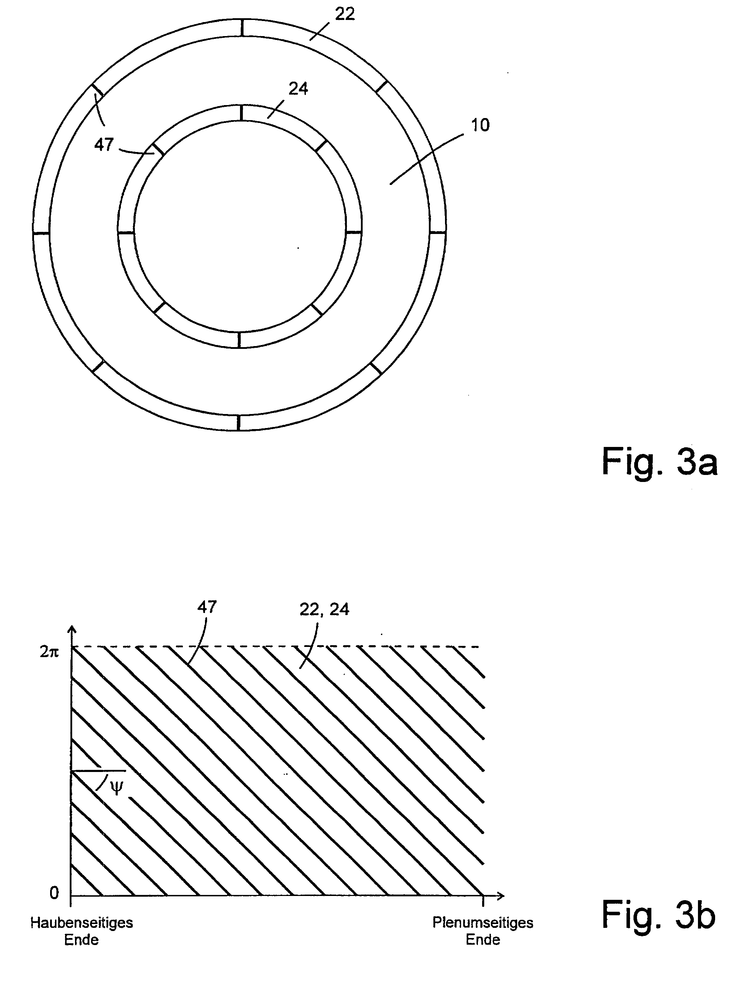

Figur 3a zeigt innere Kühlkanäle 24 und äußere Kühlkanäle 22 in einem achsnormalen Schnitt durch die innere und äußere Brennkammerwand 44 und 42 einer Brennkammer 10. Die in Fig. 3 gezeigte Brennkammer 10 sieht beispielhaft eine Unterteilung in 8 Segmente vor, die durch Schotts 47 voneinander getrennt sind. Aus Gründen der Kühlungsoptimierung und der mechanischen Integrität ist es von Vorteil, die Kühlkanäle in eine grosse Anzahl (Grössenordnung bis zu 100 oder mehr) von Segmenten zu unterteilen. Bei einer solchen Zahl ist die Breite der Segmente sicherlich klein genug, um den azimutalen Schwingungsanteil zu unterdrücken.

Da die Kühlkanäle an beiden Seiten akustisch offen sind, tritt Resonanz auf, wenn die Länge $L_c$ der Kühlkanäle gerade ein ganzzahliges Vielfaches der halben Wellenlänge der axialen Schwingungen in den Kühlkanälen ist, also

$$L_c = N\,\lambda/2, \qquad (3)$$

mit einer ganzen Zahl N.

Erfindungsgemäß wird die Länge der Kühlkanäle nun so ausgelegt, daß sie bei der <u>azimutalen</u> Grundfrequenz der Brennkammer $\omega_0$ resonant werden. Ihre Länge ist dann $L_c = \lambda_0/2$, wobei $\lambda_0 = 2\pi c_c/\omega_0$ die Wellenlänge der <u>axialen</u> Schwingung der Frequenz $\omega_0$ in den Kühlkanälen ist. Die Größe $c_c$ stellt dabei die Schallgeschwindigkeit in der Kühlluft dar.

Die so ausgelegten Kühlkanäle dämpfen also die azimutale Grundschwingung der Brennkammer. Da die Frequenzen $\omega_{0,n}$ der höheren azimutalen Moden (0,n) der Brennkammer, wie oben dargestellt, durch $n\omega_0$ gegeben sind, sind die Wellenlängen der entsprechenden axialen Schwingungen in den Kühlkanälen durch $\lambda_n = \lambda_0/n$ gegeben. Nach Gleichung (3) dämpfen die Kühlkanäle also nicht nur die azimutale Grundmode (0,1), sondern zugleich alle höheren azimutalen Moden (0,n).

Es soll nun die erforderliche Länge der Kühlkanäle für eine typische Ringbrennkammer mit $L \approx R$ abgeschätzt werden. Die Frequenz der azimutalen Grundmode ist nach Gleichung (2) durch $\omega_{0,1} = c_H/R$ gegeben, wobei $c_H$ die Schallgeschwindigkeit im Abgas darstellt. Die erforderliche Länge der Kühlkanäle ist dann nach dem oben gesagten $L_c = R\pi c_c/c_H$. Für typische Werte der Schallgeschwindigkeiten im unverbrannten Gas, $c_c \approx 530$ m/s, und im Abgas, $c_H \approx 780$ m/s, ergibt sich $L_c \approx 2.1\,R \approx 2L$. Die Kühlkanäle müssen also etwa doppelt so lang sein, wie die Brennkammer.

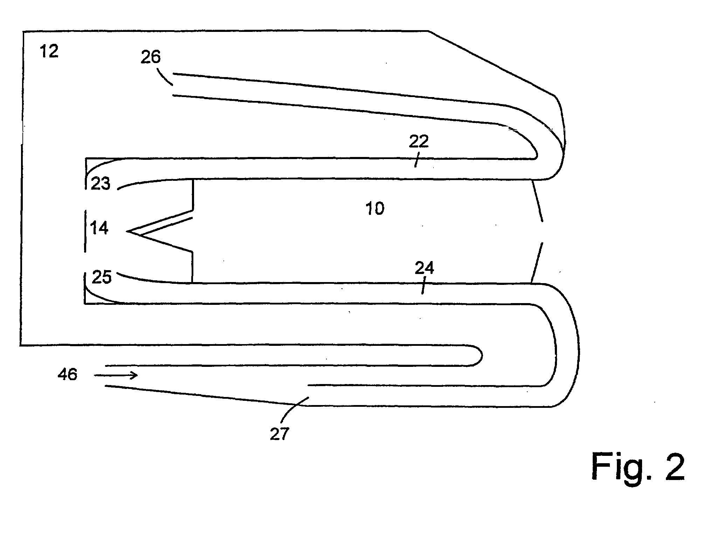

Erfindungsgemäß wird, wie in Fig. 2 gezeigt, die notwendige Länge der Kühlkanäle dadurch erreicht, daß die Kühlkanäle zunächst an der Brennkammer entlang laufen, und sich am Ende der Brennkammer in den Sammelraum zurückbiegen.

Besonders vorteilhaft ist es, wenn die Kühlkanäle spiralig um die Brennkammer geführt werden, wie in Fig. 3b dargestellt. In Fig. 3b sind beispielhaft mehrere der inneren oder äußeren Kühlkanalsegmente 22, 24 dargestellt. Die einzelnen Kühlkanalsegmente sind durch Schotts 47 voneinander abgetrennt. Durch geeignete Wahl des Winkels ψ zwischen der Brennkammerachse und der Orientierung der Kanäle kann in dieser Ausführungsform die notwendige Länge der Kühlkanäle erreicht werden. Wie aus Fig. 3b ersichtlich, können die Kühlkanäle 22, 24 um einen Faktor 1/cos ψ länger sein als die Brennkammer 10. Um die Kühlkanäle 22, 24 etwa doppelt so lang wie die Brennkammer 10 auszuführen, sollte der Winkel demnach ψ ≈ 60° betragen. Ein Vorteil dieser Ausführungsform der Erfindung ist, daß die Kühlkanäle 22, 24 über ihre ganze Länge an der Brennkammerwand 42 bzw. 44 entlang geführt werden.

Bei der genauen Auslegung der Kühlluftzuführung ist noch zu beachten, daß die geometrische Länge der Kühlkanäle 22, 24 nur im Grenzfall niedriger Frequenzen der akustischen Länge der Kühlkanäle entspricht. Für höhere Frequenzen sind die üblichen Endkorrekturen anzubringen, um die genau notwendige geometrische Länge der Kühlkanäle zu bestimmen.

Weiter sollten die Querschnitte der Öffnungen 26,27 der Kühlkanäle zum Sammelraum hin möglichst deutlich kleiner als der Querschnitt des Sammelraums selbst sein, um gut definierte Reflexionsbedingungen am Ende der Kühlkanäle zu erhalten.

Zuletzt soll darauf hingewiesen werden, daß in der obigen Behandlung Machzahleffekte, also Korrekturen durch Gasgeschwindigkeiten größer etwa 10% der Schallgeschwindigkeit, der verständlicheren Darstellung halber vernachlässigt wurden. Solche Korrekturen sind wegen der hohen Gasgeschwindigkeiten in den Kühlkanälen notwendig. Die Berücksichtigung dieser Korrekturen stellt für den Fachmann jedoch keine Schwierigkeit dar. Die Auslegung der Kühlkanäle unter Berücksichtigung dieser Korrekturen - im wesentlichen eine Erhöhung der Wellenlaufzeiten bzw. Eigenfrequenzen um einen Faktor $1/(1-(u/c_c)^2)$ bei einer Gasgeschwindigkeit u - ist also im Rahmen der beschriebenen Erfindung.

**Bezugszeichenliste**

10    Brennkammer
12    Sammelraum
14    Brennkammerhaube
16    Bypass-Öffnungen
20    Brenner
22    äußerer Kühlkanal
23    Eintritt des äußeren Kühlkanals in die Brennkammerhaube
24    innerer Kühlkanal
25    Eintritt des inneren Kühlkanals in die Brennkammerhaube
26    Öffnung des äußeren Kühlkanals in den Sammelraum
27    Öffnung des inneren Kühlkanals in den Sammelraum
30    Maschinenachse (Symmetrieachse)
40    Brennkammeraustritt zur Turbine
42    äußere Brennkammerwand
44    innere Brennkammerwand
46    Luft vom Verdichter
47    Schotts in Kühlkanälen

**Patentansprüche**

1. Ringbrennkammer für eine Gasturbine mit *verminderten thermoakustischen Schwingungen,* bei der stromaufwärts einer luftgekühlten Brennkammer (10) eine Brennkammerhaube (14) angeordnet ist, wobei zumindest ein Anteil eines vom Verdichter kommenden Luftstroms (46) über Kühlkanäle (22; 24) geführt wird, welche zumindest in Teilbereichen entlang der Brennkammer (10) verlaufen, wobei die Kühlkanäle (22;24) über einen Eintritt (23;25) in die Brennkammerhaube (14) münden, **dadurch gekennzeichnet, dass** die Kühlkanäle (22;24) als Resonatoren ausgebildet sind, die bei der azimutalen Grundfrequenz ($\omega_0$) der Brennkammer (10) resonant sind, indem deren Länge ($L_c$) der halben Wellenlänge ($\lambda_0$) der axialen Schwingung der Frequenz ($\omega_0$) in den Kühlkanälen (22;24) entspricht.

2. Ringbrennkammer nach Anspruch 1, **dadurch gekennzeichnet, dass** die Kühlkanäle (22;24) durch meridiane Schotts (47) in voneinander getrennte Kanäle aufgeteilt sind.

3. Ringbrennkammer nach Anspruch 1, **dadurch gekennzeichnet, dass** die Kühlkanäle (22;24) U-förmig ausgebildet sind.

4. Ringbrennkammer nach Anspruch 1, **dadurch gekennzeichnet, dass** die Kühlkanäle (22;24) spiralig um die Brennkammer (10) geführt sind.

5. Ringbrennkammer nach Anspruche 1, **dadurch gekennzeichnet, dass** die Kühlkanäle (22;24) Eintrittsöffnungen (26;27) aufweisen, deren Querschnitte klein im Verhältnis zum Querschnitt des Sammelraums (12) am Eintrittsort sind.

**Claims**

1. Annular combustion chamber for a gas turbine with reduced thermoacoustic oscillations in which a combustion-chamber dome (14) is arranged upstream of an air-cooled combustion chamber (10), at least a portion of an air flow (46) which comes from the compressor being directed via cooling ducts (22; 24) which run at least in sections along the combustion chamber (10), the cooling ducts (22; 24) leading via an entry (23; 25) into the combustion-chamber dome (14), **characterized in that** the cooling ducts (22; 24) are designed as resonators which are resonant at the azimuthal fundamental frequency ($\omega_0$) of the combustion chamber (10), because the length $L_c$ of the cooling ducts is half the wavelength ($\lambda_0$) of the axial oscillation of the frequency ($\omega_0$) in the cooling ducts (22; 24).

2. Annular combustion chamber according to Claim 1, **characterized in that** the cooling ducts (22; 24) are divided by meridian partitions (47) into ducts which are separate from one another.

3. Annular combustion chamber according to Claim 1, **characterized in that** the cooling ducts (22; 24) are of U-shaped design.

4. Annular combustion chamber according to Claim 1, **characterized in that** the cooling ducts (22; 24) are run spirally around the combustion chamber (10).

5. Annular combustion chamber according to Claim 1, **characterized in that** the cooling ducts (22; 24) have entry openings (26; 27), the cross sections of which are small in relation to the cross section of the collecting space (12) at the entry location.

**Revendications**

1. Chambre de combustion annulaire pour une turbine à gaz avec des vibrations thermoacoustiques réduites, dans laquelle une hotte (14) de la chambre de combustion est disposée en amont d'une chambre de combustion (10) refroidie à l'air, dans laquelle au moins une partie d'un courant d'air (46) venant du compresseur est conduite par des canaux de refroidissement (22; 24), qui sont situés au moins dans des régions partielles le long de la chambre de combustion (10), et dans laquelle les canaux de refroidissement (22; 24) débouchent par une entrée (23; 25) dans la hotte (14) de la chambre de combustion, **caractérisée en ce que** les canaux de refroidissement (22; 24) se présentent sous la forme de résonateurs, qui entrent en résonance à la fréquence azimutale fondamentale ($\omega_0$) de la chambre de combustion (10), du fait que la longueur ($L_c$) de ceux-ci correspond à la moitié de la longueur d'onde ($\lambda_0$) de la vibration axiale de fréquence ($\omega_0$) dans les canaux de refroidissement (22; 24).

2. Chambre de combustion annulaire suivant la revendication 1, **caractérisée en ce que** les canaux de refroidissement (22; 24) sont partagés en canaux séparés les uns des autres par des cloisons méridiennes (47).

3. Chambre de combustion annulaire suivant la revendication 1, **caractérisée en ce que** les canaux de refroidissement (22; 24) sont en forme de U.

4. Chambre de combustion annulaire suivant la revendication 1, **caractérisée en ce que** les canaux de refroidissement (22; 24) sont conduits en forme de spirale autour de la chambre de combustion (10).

5. Chambre de combustion annulaire suivant la revendication 1, **caractérisée en ce que** les canaux de refroidissement (22; 24) présentent des ouvertures d'entrée (26; 27), dont les sections transversales sont petites par rapport à la section transversale du collecteur (12) au point d'entrée.

Fig. 1

Fig. 2

Fig. 3a

Fig. 3b